# EUROPÄISCHE PATENTSCHRIFT

(11) **EP 1 043 505 B1**
(45) Veröffentlichungstag und Bekanntmachung des Hinweises auf die Patenterteilung: **18.01.2006**
(21) Anmeldenummer: 00104954.3
(22) Anmeldetag: 08.03.2000
(51) Int. Cl.: F04D 29/04, F04D 19/04

(54) **Vakuumpumpe mit Gaslagerung**
Vacuum pump with gas bearings
Pompe à vide avec des paliers à gaz

(30) Priorität: 09.04.1999 DE 19915983
(43) Veröffentlichungstag der Anmeldung: 11.10.2000
(73) Patentinhaber: Pfeiffer Vacuum GmbH, 35614 Asslar (DE)
(72) Erfinder: Conrad, Armin, 35745 Herborn (DE); Eberl, Wolfgang, 35606 Solms (DE)

(56) Entgegenhaltungen:
- US-A- 3 058 785
- US-A- 3 268 205
- US-A- 3 832 084
- US-A- 5 415 477
- US-A- 5 466 119

## Beschreibung

Die Erfindung betrifft eine Vakuumpumpe mit Gaslagerung nach dem Oberbegriff des ersten Patentanspruches.

Unter den rotierenden Vakuumpumpen zeichnen sich Gasreibungspumpen dadurch aus, daß sie zum Einsatz in der Hoch- und Ultrahochvakuumtechnik vorzüglich geeignet sind. Da aufgrund ihrer Funktionsweise das Druckverhältnis exponentiell mit dem Molekulargewicht ansteigt, können sie sehr effektiv zur Erzeugung eines kohlenwasserstofffreien Hochvakuums eingesetzt werden. Die bekanntesten und erfolgreichsten Pumpen dieser Art sind Turbomolekularpumpen und Molekularpumpen, zum Beispiel nach der Bauart von Holweck, oder auch Kombinationen der beiden. Alle im folgenden aufgeführten Eigenschaften und Konstruktionsmerkmale, welche den Stand der Technik betreffen, die auftretenden Schwierigkeiten und deren Beseitigung im Rahmen der Erfindung treffen ebenso für andere Vakuumpumpen und insbesondere Gasreibungspumpen zu.

Wesentlich für einen guten Wirkungsgrad einer solchen Pumpe sind eine hohe Drehzahl des Rotors und sehr enge, genau definierte Spalte zwischen rotierenden und feststehenden Bauteilen. Diese Erfordemisse bedeuten für die Konstruktion zwei Bedingungen, die hohe Ansprüche an die Lagerung des Rotors stellen. Die Lagerung von Gasreibungspumpen erfolgte ursprünglich in Kugellagern. Mit der Entwicklung von hochwertigen Magnetwerkstoffen wurde es möglich, die Baugröße und den Aufwand für Magnetlager so weit zu reduzieren, daß diese vom technischen und wirtschaftlichen Standpunkt aus ihre sinnvolle Anwendung bei schnelldrehenden Vakuumpumpen fanden. Einige Versuche, Gasreibungspumpen mit Gaslagerung auszustatten, führten aus weiter unten beschriebenen Gründen nicht zum Erfolg.

Wenn Gasreibungspumpen von ihrer Wirkungsweise her besonders dazu geeignet sind, ein kohlenwasserstofffreies Vakuum herzustellen, kann der Einsatz von öl- oder fettgeschmierten Kugellagern diesen Vorteil zunichte machen. Während beim Betrieb der Pumpe die aus den Schmiermitteln austretenden Kohlenwasserstoffe von der Hochvakuumseite ferngehalten werden, können diese bei Stillstand auf die Hochvakuumseite diffundieren. Selbst aufwendige Maßnahmen zur Verhinderung dieses Effektes machen solche Pumpen nicht absolut kohlenwasserstofffrei und begrenzen somit ihren Einsatz. Trockene Wälz- oder Gleitlager sind wegen ihrer hohen Reibungsverluste und ihres hohen Verschleißes für den Dauerbetrieb in den vorliegenden Fällen nicht geeignet.

Magnetlager in den unterschiedlichsten Ausführungsformen bieten sich für den Einsatz in der Vakuumtechnik an, da mit ihnen ein trockener und verschleißfreier Betrieb ermöglicht wird. Sie erfordern jedoch einen hohen Aufwand an Elektronik, um einen sicheren und störungsfreien Lauf zu garantieren. Zudem können Probleme beim Einsatz in der Nähe von starken Magnetfeldem oder in strahlungsintensiver Umgebung auftreten. Notlager für den Fall von Störungen bedeuten einen zusätzlichen Aufwand.

In den Druckschriften DE-OS 22 55 618, DE-OS 23 59 456 und DE-OS 38 91 280 werden Turbomolekularpumpen mit Gaslager in verschiedenen Varianten vorgestellt. Aus der US-Pantentschrift 5 415 477 ist ein mittels O-Ringen radial gestütztes Gaslarger bekannt. Mit diesen werden die oben beschriebenen Nachteile von mechanischen und magnetischen Lagern teilweise umgangen. Sie konnten sich jedoch im praktischen Einsatz nicht durchsetzen. Die Gründe dafür waren: Zu großer Gasdurchsatz, störende Toträume zwischen Rotor- und Statorscheiben, zu große Baulänge der Pumpe, mangelnde Stabilität, unzureichende Präzision über die gesamte Baulänge bei der Montage u.a.

Die Weiterentwicklung aerodynamischer Lager führte zu Systemen, mit denen ein Teil dieser Nachteile behoben werden kann (DE-PS 44 36 156). Durch Anwendung von Lasertechnik wird es möglich, eine große Anzahl von Mikrolöchern in die Lagerflächen zu bohren. Diese treten an die Stelle weniger großer Düsen herkömmlicher Gaslager. Dadurch wird eine stabile Lagerung bewirkt, der Gasdurchsatz und die Toträume werden reduziert und die Steifigkeit kann durch engere Spalte erhöht werden.

Mit dem letzten Merkmal, der Verringerung der Spalte, stößt man jedoch sehr schnell an Grenzen, besonders wenn es um die Präzision bei der Montage von Stator- und Rotorteilen geht. Da zum Beispiel bei der Verwendung von zwei in einem gewissen Abstand voneinander angebrachten Radiallagem die geringste Abweichung der Zentrierung in einem der Lager eine unzulässige Veränderung der äußerst engen Spalte im jeweils anderen Lager hervorruft, ist es äußerst schwierig, wenn nicht nahezu unmöglich, die notwendigen hochpräzisen Einstellungen vorzunehmen.

Die Erfindung hat sich zur Aufgabe gestellt, eine Vakuumpumpe mit Gaslagerung vorzustellen, welche unter Berücksichtigung der vakuumtechnischen Vorgaben bei minimalem Aufwand einen sicheren und störungsfreien Betrieb garantiert. Die durch die Anwendung von neuen Techniken zu erzielenden geringen Spalte bei Gaslagern sollen im praktischen Einsatz, insbesondere bei der Montage der Pumpe, realisierbar sein. Die Vorteile, welche durch die engeren Spalte entstehen, sollen bei den Dimensionen der Gaslager und bei der Verringerung des Gesamtaufwandes zum Tragen kommen.

Die Aufgabe wird durch die kennzeichnenden Merkmale des 1. Patentanspruches gelöst. Die Ansprüche 2 - 9 stellen weitere Ausgestaltungsformen der Erfindung dar.

Die erfinderische Anordnung erst ebnet den Weg zur praktischen Nutzung der Vorteile, welche sich durch die erfolgreiche weitere Entwicklung von Gaslager und deren Anwendung bei Vakuumpumpen ergeben und die seither nicht verwirklicht werden konnten. Die elastische Lagerung der Statorteile der Gaslager ermöglicht eine präzise Montage von Gaslagern, da sich Stator- und Rotorteile durch eine gewisse Elastizität geringfügigen unvermeidlichen Verkantungen anpassen können und so ein exaktes Fluchten der Lagerbauteile erzielt wird. Die gleichzeitige Verwendung der elastischen Bauteile als Abdichtungen zwischen Räumen hoher und niedriger Drücke des Lagergehäuses bzw. der Vorvakuumkammern ist ebenfalls vorteilhaft.

Die Steifigkeit der elastischen Bauteile muß geringer sein als die Steifigkeit des Systems von Gaslagern, um den Lagerteilen ausreichend Elastizität zur Anpassung zu gewähren. Sie muß jedoch so groß sein, daß sie den Erfordernissen, welche durch die engen Spalte zwischen den pumpaktiven Rotor- und Statorelementen vorgegeben sind, gerecht wird, um ein Anlaufen der Pumpe zu vermeiden.

Mit der Verringerung der Spalte im Gaslagersystem wird eine Reihe von Vorteilen erreicht, wie z. B. höhere Steifigkeit, geringerer Gasverbrauch und niedrigere Druckdifferenz zur Erlangung der zur Lagerung notwendigen Gaspolster. Dieser letzte Vorteil eröffnet die Möglichkeit, mit Druckdifferenzen von < 1 bar auszukommen. Dann kann die natürliche Druckdifferenz von 1 bar zwischen Atmosphäre und Vakuum bereits zur Lagerung benutzt werden. Der dadurch bedingte Fortfall von Anlagen zur Erzeugung von Druckgas reduziert den technischen Aufwand, den Raumbedarf, die Betriebssicherheit und die Kosten eines Gasiagers erheblich. Die notwendige Druckdifferenz wird aufrechterhalten, indem die Gasableitungen des Gaslagersystems nach Anspruchs 4 zu einer Vakuumpumpe geführt werden. Als Vakuumpumpe kann nach Anspruch 5 die sowieso vorhandene Vorvakuumpumpeinrichtung dienen. Wenn die Gasreibungspumpe mit einer nach Atmosphäre ausstoßenden Druckstufe ausgerüstet ist und somit eine separate Vorvakuumpumpeinrichtung entfällt, können nach Anspruch 6 die Gasableitungen an eine Stelle dieser Druckstufe oder nach Anspruch 7 vor diese Druckstufe geführt werden. Wahlweise kann die Gaszufuhr direkt von der Atmosphäre aus erfolgen nach Anspruch 8 oder durch eine zusätzliche Kompressionseinrichtung nach Anspruch 9, an welche allerdings geringere Ansprüche gestellt werden können als bei herkömmlichen Gaslagern.

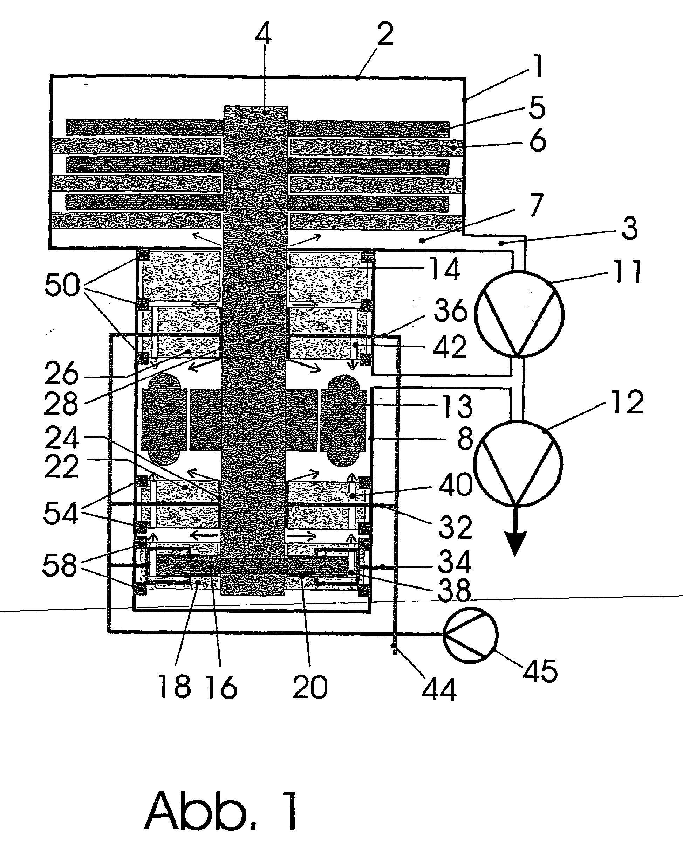

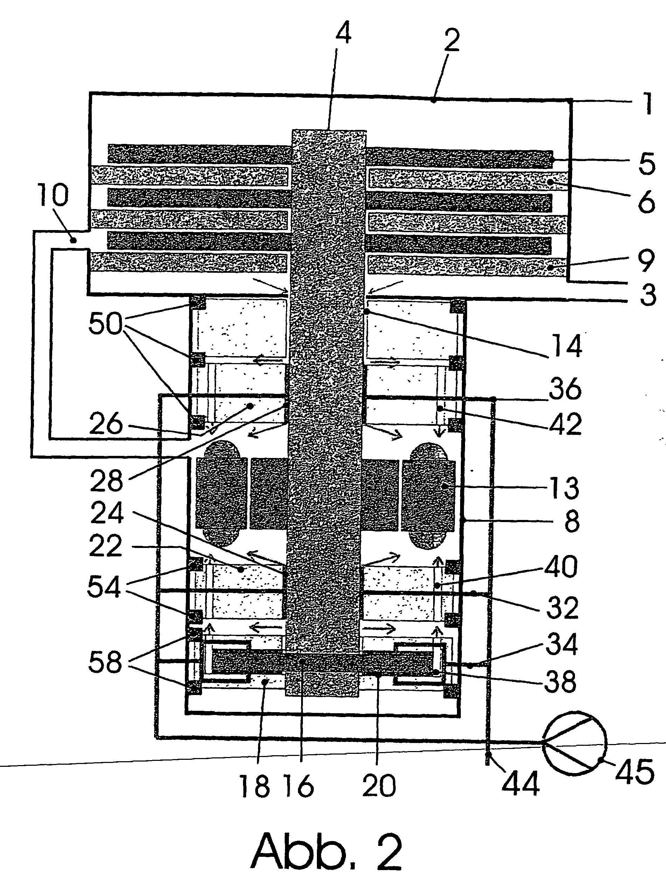

Anhand der Abbildungen 1 und 2 soll die Erfindung am Beispiel einer Turbomolekularpumpe näher erläutert werden.

Es zeigen:
Abbildung 1 die erfindungsgemäße Anordnung einer Turbomolekularpumpe mit Gaslagern
Abbildung 2 eine weitere Ausführungsform der erfindungsgemäßen Anordnung

In dem Pumpengehäuse 1 mit Ansaugflansch 2 und Ausstoßöffnung 3 sind die feststehenden pumpaktiven Bauteile als Statorscheiben 6 montiert. Die rotierenden pumpaktiven Bauteile sind als Rotorscheiben 5 mit der Rotorwelle 4 fest verbunden. Diese wird durch eine Antriebseinrichtung 13 in Rotation versetzt. Die Rotorwelle wird in einem System von Gaslagern, welche im wesentlichen aus Statorelementen 18, 22 und 26 mit Gaszufuhreinrichtungen 32, 34 und 36 und Gasauslaßöffnungen 20, 24 und 28 bestehen, gehalten. Die Statorelemente 18, 22 und 26 sind erfindungsgemäß über Systeme elastischer Bauteile 50, 54 und 58 mit dem Lagergehäuse 8 verbunden. Diese elastischen Bauteile dienen gleichzeitig zur Abdichtung zwischen Räumen hoher und niedriger Drücke des Lagergehäuses 8 bzw. des Vorvakuumraumes 7.

Für die Funktion der Anordnung ist es wichtig, daß die Steifigkeit der elastischen Bauteile 50, 54 und 58 geringer ist als die Steifigkeit des Systems von Gaslagem. Sie darf jedoch eine gewisse Grenze nicht unterschreiten, welche durch die notwendigen engen Spalte zwischen den Rotor- und Statorelementen und die auf den Rotor wirkenden Kräfte vorgegeben ist.

Das aus den Gasauslaßöffnungen 20, 24 und 28 strömende Gas wird über ein System von Gasableitungen 38, 40 und 42 an eine Vakuumpumpeinrichtung 11, 22 angeschlossen. Diese Vakuumpumpeinrichtung kann gleichzeitig als Vorpumpe für die Gasreibungspumpe dienen und ist in diesem Fall mit der Vorvakuumkammer 7 verbunden.

Nach Abb. 2 kann die Gasreibungspumpe mit einer nach höherem Druck oder gar bis Atmosphärendruck ausstoßenden Stufe 9 versehen sein. Die Gasableitungen 38, 40 und 42 können dann an einer Stelle 10 dieser Stufe mit einem Druckniveau zwischen Vorvakuumdruck und Atmosphärendruck zugeführt werden.

Die Gaszufuhrleitungen 32, 34 und 36 sind entweder bei 44 mit dem Atmosphärendruck verbunden oder an eine Kompressionseinrichtung 45 angeschlossen.

## Patentansprüche

1. Vakuumpumpe mit in einem Gehäuse (1), versehen mit Ansaugöffnung (2) und Auslaßöffnung (3), angeordneten feststehenden (6) und rotierenden (5) pumpaktiven Bauteilen, wobei die rotierenden pumpaktiven Bauteile auf einer Rotorwelle (4) montiert sind, welche in einem System von Gaslagern gehalten wird und die Gaslager im wesentlichen aus Statorelementen (18, 22, 26) mit Gaszufuhreinrichtungen (32, 34, 36) und Gasauslaßöffnungen (20, 24, 28) bestehen, **dadurch gekennzeichnet, daß** Systeme elastischer Bauteile (50, 54, 58) die statorelemente des Gaslagers (18, 22, 24) in einen Lagergehäuse halter.

2. Vakuumpumpe nach Anspruch 1, **dadurch gekennzeichnet, daß** die elastischen Bauteile (50, 54, 58) gleichzeitig zur Abdichtung zwischen Räumen hoher und niedriger Drücke des Lagergehäuses (8) bzw. der Vorvakuumkammer (7) dienen.

3. Vakuumpumpe nach einem der vorangehenden Ansprüche, **dadurch gekennzeichnet, daß** die Steifigkeit der Systeme elastischer Bauteile (50, 54, 58) geringer ist als die Steifigkeit des Systems von Gaslagern.

4. Vakuumpumpe nach einem der vorangehenden Ansprüche, **dadurch gekennzeichnet, daß** die Gasableitungen (38, 40, 42) an eine Vakuumpumpeinrichtung (11, 12) angeschlossen sind.

5. Vakuumpumpe nach Anspruch 4, **dadurch gekennzeichnet, daß** die Vakuuumpumpeinrichtung (11, 12) gleichzeitig als Vorvakuumpumpe für die Gasreibungspumpe vorgesehen ist.

6. Vakuumpumpe nach einem der Ansprüche 1 - 3, **dadurch gekennzeichnet, daß** sie mit einer nach Atmosphäre ausstoßenden Stufe (9) versehen ist und die Gasableitungen (38, 40, 42) an einer Stelle (10) dieser Stufe mit einem Druckniveau zwischen Vorvakuumdruck und Atmosphärendruck zugeführt werden.

7. Vakuumpumpe nach Anspruch 6, **dadurch gekennzeichnet, daß** der Druck an der Stelle (10), zu welcher die Gasableitungen (38, 40, 42) geführt werden, dem Vorvakuumdruck entspricht.

8. Vakuumpumpe nach einem der Ansprüche 1 - 7, **dadurch gekennzeichnet, daß** die Gaszufuhrleitungen (32, 34, 36) über eine Leitung (44) mit dem äußeren Atmosphärendruck verbunden sind.

9. Vakuumpumpe nach einem der Ansprüche 1-7, **dadurch gekennzeichnet, daß** die Gaszufuhrleitungen (32,34, 36) an einer Kompressionseinrichtung (45) angeschlossen sind.

## Claims

1. Vacuum pump having fixed (6) and rotating (5) pumping-active components disposed in a housing (1) provided with inlet opening (2) and outlet opening (3), wherein the rotating pumping-active components are mounted on a rotor shaft (4) that is held in a system of gas bearings and the gas bearings substantially comprise stator elements (18, 22, 26) with gas supply devices (32, 34, 36) and gas outlet openings (20, 24, 28), **characterized in that** systems of elastic components (50, 54, 58) hold the stator elements of the gas bearing (18, 22, 26) in a bearing housing.

2. Vacuum pump according to claim 1, **characterized in that** the elastic components (50, 54, 58) are simultaneously used to effect sealing between spaces of high and low pressures of the bearing housing (8) and/or of the backing pressure chamber (7).

3. Vacuum pump according to one of the preceding claims, **characterized in that** the stiffness of the systems of elastic components (50, 54, 58) is lower than the stiffness of the system of gas bearings.

4. Vacuum pump according to one of the preceding claims, **characterized in that** the gas discharge lines (38, 40, 42) are connected to a vacuum pumping device (11, 12).

5. Vacuum pump according to claim 4, **characterized in that** the vacuum pumping device (11, 12) is provided simultaneously as a backing pump for the gas friction pump.

6. Vacuum pump according to one of claims 1 - 3, **characterized in that** it is provided with a stage (9) expelling to atmosphere and the gas discharge lines (38, 40, 42) are supplied at one point (10) of said stage with a pressure level between backing pressure and atmospheric pressure.

7. Vacuum pump according to claim 6, **characterized in that** the pressure at the point (10), to which the gas discharge lines (38, 40, 42) are run, corresponds to the backing pressure.

8. Vacuum pump according to one of claims 1 - 7, **characterized in that** the gas supply lines (32, 34, 36) are connected by a line (44) to the outer atmospheric pressure.

9. Vacuum pump according to one of claims 1 - 7, **characterized in that** the gas supply lines (32, 34, 36) are connected to a compression device (45).

## Revendications

1. Pompe à vide comportant, à l'intérieur d'un carter (1) muni d'une ouverture d'admission (2) et d'une ouverture de sortie (3), des organes fixes (6) et des organes rotatifs (5) actifs en pompage, dans laquelle les organes rotatifs (5) actifs en pompage sont montés sur un arbre de rotor (4) maintenu dans un système de paliers à gaz, ces paliers à gaz étant composés essentiellement d'éléments de stator (18, 22, 26) munis de dispositifs d'admission de gaz (32, 34, 36) et d'ouvertures de sortie de gaz (20, 24, 28), **caractérisée en ce que** des ensembles de composants élastiques (50, 54, 58) maintiennent les éléments de stator (18, 22, 26) du palier à gaz dans un logement de palier (8).

2. Pompe à vide selon la revendication 1, **caractérisée en ce que** les composants élastiques (50, 54, 58) servent en même temps à assurer l'étanchéité entre des chambres à haute et basse pression du logement de palier (8) ou de la chambre à vide préliminaire (7).

3. Pompe à vide selon l'une quelconque des revendications précédentes, **caractérisée en ce que** la rigidité des ensembles de composants élastiques (50, 54, 58) est inférieure à la rigidité du système de paliers à gaz.

4. Pompe à vide selon l'une quelconque des revendications précédentes, **caractérisée en ce que** les conduites d'évacuation de gaz (38, 40, 42) sont raccordées à une installation de pompage à vide (11, 12).

5. Pompe à vide selon la revendication 4, **caractérisée en ce que** l'installation de pompage à vide (11, 12) est prévue en même temps comme pompe à vide préliminaire pour la pompe à gaz à friction.

6. Pompe à vide selon l'une quelconque des revendications 1 à 3, **caractérisée en ce que** cette pompe est équipée d'un étage (9) refoulant vers l'atmosphère et **en ce que** les conduites d'évacuation de gaz (38, 40, 42) arrivent en un point (10) de cet étage avec un niveau de pression compris entre la pression de vide préliminaire et la pression atmosphérique.

7. Pompe à vide selon la revendication 6, **caractérisée en ce qu'**au point (10) auquel arrivent les conduites d'évacuation de gaz (38, 40, 42), la pression correspond à la pression du vide préliminaire.

8. Pompe à vide selon l'une quelconque des revendications 1 à 7, **caractérisée en ce que** les conduites d'admission de gaz (32, 34, 36) sont raccordées à la pression atmosphérique extérieure par le biais d'une conduite (44).

9. Pompe à vide selon l'une quelconque des revendications 1 à 7, **caractérisée en ce que** les conduites d'admission de gaz (32, 34, 36) sont raccordées à une installation de compression (45).
